# EUROPÄISCHE PATENTANMELDUNG

(11) **EP 2 146 108 A1**
(43) Veröffentlichungstag der Anmeldung: **20.01.2010**
(21) Anmeldenummer: 08160477.9
(22) Anmeldetag: 16.07.2008
(51) Int. Cl.: F16D 23/14

(54) **Ausrückeinrichtung mit einem Koppelelement zur Betätigung einer Reibungskupplung eines Kraftfahrzeuges**

(71) Anmelder: ZF Friedrichshafen AG, 88038 Friedrichshafen (DE)
(72) Erfinder: Nagler, Franz, 97503 Gädheim (DE); Otto, Thomas, 97424 Schweinfurt (DE)

(57) **Zusammenfassung**

Die Erfindung beschreibt eine Ausrückeinrichtung zur Betätigung einer Reibungskupplung eines Kraftfahrzeuges. diese umfasst ein ortsfest zu der Reibungskupplung und koaxial zu deren Rotationsachse angeordnetes Tragelement, ein an diesem gelagertes axial verlagerbares Ausrückelement mit einem daran angeordneten Ausrücklager mit einem drehfest zu dem Ausrückelement angeordneten ersten Lagerring, Wälzkörpern und mit einem umlaufenden zweiten Lagerring und mit einem Koppelelement, welches in Wirkverbindung zwischen dem umlaufenden Lagerring und einem Betätigungsorgan der Reibungskupplung angeordnet ist. Zur Entkopplung der Ausrückeinrichtung von kupplungsseitig eingebrachten Taumelschwingungen wird vorgeschlagen, das Koppelelement mit einem zu dem umlaufenden Lagerring verlagerbaren formbeständigen Anlagebereich zur Anlage des Betätigungsorgans und mit einem mit diesem und dem umlaufenden Lagerring wirkverbundenen, unter dem Einfluss von Taumelschwingungen formveränderlichen Verformungsbereich auszubilden, wodurch der Anlagebereich zur Aufnahme einer Taumelbewegung um die zur Rotationsachse der Reibungskupplung senkrechten Raumachsen verschwenkbar gelagert ist.

## Beschreibung

Die Erfindung betrifft eine Ausrückeinrichtung mit einem Koppelelement zur Betätigung einer Reibungskupplung eines Kraftfahrzeuges gemäß dem Oberbegriff des Patentanspruchs 1.

Eine Ausrückeinrichtung der eingangs genannten Art dient zum Betätigen einer Fahrzeugreibungskupplung, wobei üblicherweise eine als Betätigungsorgan dienende Membranfeder im Anlagekontakt zu einem mittels eines Ausrückelement axial verlagerbaren Wälzlager. An dieser Schnittstelle kommt es im Betrieb zu unerwünschten Bewegungsabläufen, insbesondere umlaufenden Taumelbewegungen, welche die axiale Ausrückbewegung überlagern. Ursache der Taumelbewegungen sind zumeist ein Schiefstand der Antriebswelle des Verbrennungsmotors zu der Eingangswelle eines der Reibungskupplung im Antriebstrang folgenden Getriebes in Verbindung mit einem Achsversatz der Wellen, sowie weitere Form-, Lage- und Maßabweichungen des Antriebsstranges. Ebenso ursächlich ist die dynamische Belastung der Kurbelwelle durch die im Verbrennungsmotor periodisch erfolgende Verbrennung.

Als Folge der Taumelbewegungen treten an der Ausrückeinrichtung Zwangskräfte, insbesondere zu Kippmomenten führende Querkräfte auf, die beim Betätigen der Reibungskupplung wiederum zu Funktionsbeeinträchtigungen führen und z.B. eine Betätigungswegregelung unerwünscht beeinflussen sowie die Lebensdauer der Elemente der Ausrückeinrichtung und hierbei im Besonderen die der Gelenkverbindungen, Dicht- und Führungselemente herabsetzen. Neben einem abrasiven Verschleiß kommt es zu Schwell- und Wechselbelastungen an Bauteilen, die deren Ermüdung fördern oder z.B. das Setzen von Elastomeren beschleunigen. Ferner beeinträchtigen die vorgenannten überlagerten Bewegungsabläufe die Wälzlagerkinematik, was zu einem erhöhten Gleitanteil zwischen Wälzkörpern und Lagerringen führt und damit den Schmierungsbedarf erhöht bzw. bei begrenztem Schmierstoffangebot die Lagerlebensdauer ungünstig beeinträchtigt.

Eine gattungsgemäße Ausrückeinrichtung mit einem Koppelelement ist bereits mit der EP 1 589 246 A1 bekannt geworden, wobei durch das Koppelelement dort die bei einem axialen Betätigungshub üblicherweise zwischen den Membranfederzungenenden und dem umlaufenden Lagerring des Ausrücklagers auftretende Reibung reduziert werden kann. Das Koppelelement weist einen entgegen einer Rückstellkraft in radialer Richtung verlagerbaren Aufnahmeabschnitt in Form eines Ringkranzes aus Federzungen zur Aufnahme der Membranfederzungenenden auf und ist mit einem Halteabschnitt an dem umlaufenden Lagerring angeordnet, wodurch bei einer Axialbetätigung der Ausrückeinrichtung eine radiale Verlagerung der Membranfederzungenenden im Wesentlichen reibungsfrei von dem Koppelelement aufgenommen werden kann. Dagegen ist das Koppelelement axial vergleichsweise steif ausgebildet und kann die Axialbewegung des Ausrücklagers im Wesentlichen verlust- bzw. spielfrei auf die Membranfederzungen übertragen. Durch diese Charakteristik ist dieses Koppelelement jedoch nicht zur Aufnahme von kupplungsseitig eingebrachten Taumelbewegungen ausgebildet.

Aus der DE 199 12 432 B4 ist ein Ausrücklager für eine Reibungskupplung mit einem zwischen Membranfederzungenenden und dem umlaufenden Lagerring angeordneten Koppelelement bekannt geworden, wobei der Lagerinnenring und das Koppelelement im Anlagekontakt befindliche, zueinander korrespondierende sphärische Flächen aufweisen, deren gemeinsamer Mittelpunkt sich auf der Rotationsachse des Ausrücklagers befindet. Zum Ausgleich eines Achsversatzes zwischen der Achse der Reibungskupplung und der Ausrückerachse ist das Ausrücklager zusätzlich an dessen Tragelement in einer Radialebene verschiebbar gehalten.

Der Erfindung liegt von dem genannten Stand der Technik ausgehend die Aufgabe zugrunde, eine alternative gattungsgemäße Ausrückeinrichtung mit einem Koppelelement zur Entkopplung des Ausrücklagers von einer Taumelbewegung der Reibungskupplung bereit zu stellen.

Die vorstehend genannte Aufgabe löst die Erfindung bei einer gattungsgemäßen Ausrückeinrichtung mit den im Kennzeichen von Patentanspruch 1 aufgeführten Merkmalen. Die Lösung der Aufgabe sieht vor, dass das Koppelelement einen zu dem umlaufenden Lagerring verlagerbaren, gegenüber Taumelschwingungen im Wesentlichen formbeständigen Anlagebereich zur Anlage des Betätigungsorgans und einen mit diesem und dem umlaufenden Lagerring wirkverbundenen, unter dem Einfluss von Taumelschwingungen formveränderlichen Verformungsbereich aufweist, wobei der Anlagebereich zur Aufnahme einer Taumelbewegung um die zur Rotationsachse der Reibungskupplung senkrechten Raumachsen verschwenkbar angeordnet ist. Auf diese Weise kann eine Ausrückeinrichtung durch ein herstellungstechnisch einfaches und kostengünstiges Vorsatzelement ergänzt und Taumelschwingungen im Wesentlichen bereits vor dem Ausrücklager wirksam eliminiert werden, so dass das Ausrücklager und die weiteren Elemente der Ausrückeinrichtung gegenüber diesen entkoppelt sind und eine markante Entlastung und damit eine deutliche Lebensdauererhöhung und Geräuschsenkung der Komponenten der Ausrückeinrichtung zu verzeichnen ist. Das Koppelement kann dabei so ausgelegt werden, dass sich bei der Übertragung einer axialen Ausrückkraft kein oder ein nur geringfügiger, von einem Fahrzeugführer nicht spürbarer Totweg ergibt. Auf die aufwändige Fertigung zueinander korrespondierender sphärischer Flächen, wie diese im Stand der Technik beschrieben sind, kann verzichtet werden.

Vorteilhafte Ausgestaltungen und Weiterbildungen der Erfindung sind in den Unteransprüchen 2 bis 10 angegeben.

Gemäß einer bevorzugten Weiterbildung der Erfindung ist der Anlagebereich zusätzlich zu dessen Verschwenkmöglichkeit in einer zur Rotationsachse der Reibungskupplung senkrechten Ebene gegenüber dem umlaufenden Lagerring frei verlagerbar. Dadurch kann, insbesondere bei einem nur marginalen Achsversatz, eine bisher am Tragbereich übliche Justagevorkehrung zur Ermöglichung einer Radialjustage entfallen.

Der Anlagebereich ist im Vergleich zu dem Verformungsbereich steif ausgebildet und kann durch eine Anlaufscheibe, die bevorzugt aus einem wärmebeständigen Kunststoff oder einem metallischen Werkstoff hergestellt ist, gebildet sein. Der Verformungsbereich kann auf vielfältige Arten realisiert sein und bevorzugt ein elastisches Element, insbesondere ein federweiches Element, wie ein axial zwischen dem Anlagebereich und dem umlaufenden Lagerring oder ggf. dem Befestigungsbereich drehfest eingespanntes im Wesentlichen scheibenförmiges Ringfederelement mit axial abragenden Federarmen umfassen. In einer weiteren Realisierungsvariante kann der Verformungsbereich einen ringhülsenförmigen, in der Art eines Metallfaltenbalges ausgebildeten federweichen Membrankörper oder einen Kunststoffmantel umfassen, dessen axiale Enden jeweils wiederum drehfest an dem Anlagebereich und dem umlaufenden Lagerring bzw. einem Befestigungsbereich festgelegt sind und dessen Innenraum mit einem inkompressiblen Medium, z.B. einem Fluid oder einem Elastomer mit niedrigen Dämpfungseigenschaften gefüllt ist. Hierfür eignet sich beispielsweise ein Kraftübertragungsöl, insbesondere das Kraftübertragungsöl mit der Bezeichnung Agip DEXRON III. Das Koppelelement kann auch in besonders einfacher Weise als Elastomer-Metall-Element, insbesondere als ein Gummi-Metall-Element gefertigt werden, wobei der Elastomerkörper axial mit einer metallischen Anlaufscheibe und einem an dem umlaufenden Lagerring ausgebildeten Ringflansch durch Vulkanisieren verbunden ist.

Bevorzugt ist der Anlagebereich gegenüber dem umlaufenden Lagerring thermisch isoliert angeordnet. Wenn die als Anlagebereich dienende Anlaufscheibe bei einem Betätigungshub der Reibungskupplung in Reibkontakt mit dem Betätigungsorgan der Reibungskupplung gerät und an dieser Schnittstelle Reibungswärme entsteht, so kann diese durch die Rückseite der Anlaufscheibe und ggf. durch den Verformungsbereich vor Erreichen des umlaufenden Lagerringes an die Umgebung abgestrahlt werden, so dass dadurch eine übermäßige Erhitzung des Ausrücklagers und eine daraus resultierende Beschädigung vermieden wird.

Zur Anordnung des Koppelelementes an dem umlaufenden Lagerring kann der Verformungsbereich unmittelbar oder unter Verwendung eines gesonderten Befestigungsabschnittes mittelbar mit diesem verbunden sein. Je nach Ausführung des Verformungsbereiches können somit einem Fachmann geläufige kraft-, form-, oder stoffschlüssige Verbindungsmethoden zum Einsatz kommen, bspw. Verschrauben, Vernieten, Verrasten, Verkleben, Vulkanisieren oder Verschweißen.

Das Koppelelement kann bei der Montage der Reibungskupplung und deren Ausrückeinrichtung in einem Fahrzeugantriebsstrang sowohl mit dem Ausrücklager als auch mit dem Betätigungsorgan, d.h. zum Beispiel mit einer Membranfeder eine vormontierte Baueinheit bilden und dann mit der jeweils anderen Funktionseinheit verbunden bzw. in Anlage gebracht werden.

Gegebenenfalls kann zwischen dem Verformungsbereich und dem umlaufenden Lagerring ein gesonderter Befestigungsbereich angeordnet sein, beispielsweise in Form einer Zentrierscheibe, die wie bereits der Anlagebereich auch aus einem wärmereständigen Kunststoff oder einem metallischen Werkstoff hergestellt sein kann. Das Koppelelement mit dem Anlagebereich, dem Verformungsbereich und dem Befestigungsbereich kann separat vorgefertigt werden und dann an dem umlaufenden Lagerring z.B. mittels einer Rastverbindung werkzeugfrei verrastet werden.

Vorteilhafterweise sind zur Begrenzung der Taumelbewegung des Anlagebereiches Bewegungsbegrenzungsmittel vorgesehen. Diese können als Festanschlag z.B. am Koppelement, am Ausrücklager, am Ausrückelement oder auch am Trägerelement vorgesehen sein, um das Koppelement und insbesondere dessen Verformungsbereich vor einer übermäßigen Verformung zu schützen und in diesen Situationen den Anlagebereich unter Umgehung des Verformungsbereiches mit dem umlaufenden Lagering in Wirkverbindung zu bringen.

Die weitere Ausgestaltung der Ausrückeinrichtung, insbesondere der Ausgestaltung des Tragelementes und des Ausrückelementes, unterliegt keinen Einschränkungen. Gemäß einer bekannten Bauart kann z.B. das Tragelement als ein Führungsrohr und das Ausrückelement als Schiebehülse ausgebildet sein oder gemäß einer weiteren bekannten Bauart kann das Tragelement als ein Gehäuse eines konzentrischen Druckmittelzylinders und das Ausrückelement als dessen Kolben ausgebildet sein. Das mit dem Koppelelement in Wirkverbindung stehende Betätigungsorgan der Reibungskupplung kann bevorzugt als Membranfeder ausgeführt sein. Die Ausrückeinrichtung kann hinsichtlich des Betätigungstyps sowohl gedrückt als auch als gezogen betätigt ausgeführt sein.

Im Folgenden wird die Erfindung anhand der beigefügten Figuren beispielhaft erläutert. Es zeigen:
- Fig. 1: eine Übersichtsdarstellung einer Ausrückeinrichtung mit einem zwischen einem Ausrücklager und einem Betätigungsorgan angeordneten Koppelele- ment;
- Fig. 2: eine erste Ausführungsform eines Koppelements;
- Fig. 3: eine zweite Ausführungsform eines Koppelelements.

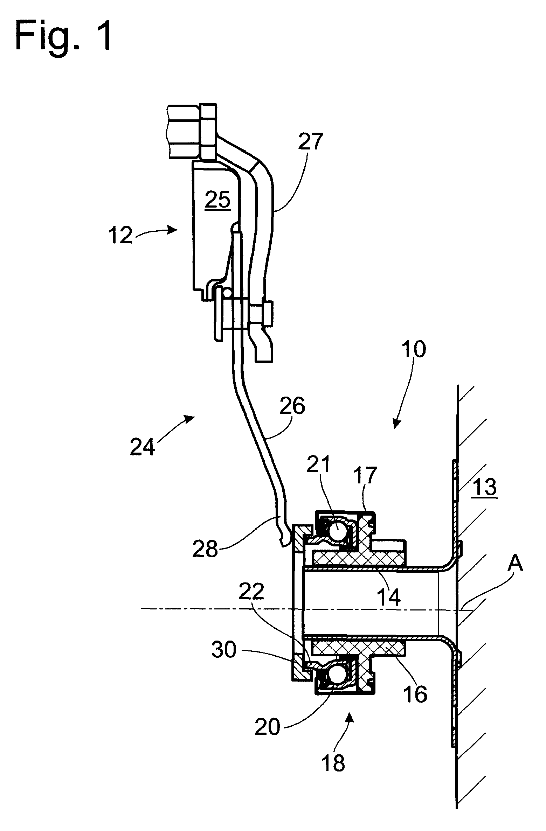

Fig. 1 zeigt in einer Übersichtsdarstellung eine Ausrückeinrichtung 10 für eine gedrückt betätigbare und in bekannter Bauweise ausgeführte Kraftfahrzeugreibungskupplung 12 mit einem koaxial zu dieser an einem Getriebe 13 festgelegtem Tragelement 14 und einem daran axial verschiebbar gelagerten Ausrückelement 16, welche in diesem Beispiel als Führungsrohr 14 und Schiebehülse 16 ausgebildet sind. Die Schiebehülse 16 trägt an einem Ende ein als Wälzlager ausgebildetes Ausrücklager 18, das über ein in Fig. 1 lediglich schematisch dargestelltes Koppelement 30 im Anlagekontakt zu Federzungen 26 einer als Betätigungsorgan 24 der Reibungskupplung 12 dienenden Membranfeder 24 steht. Das Wälzlager 18 umfasst einen äußeren, ersten Lagerring 20, der an einem Ringflansch 17 der Schiebehülse 16 festgelegt ist, einen umlaufenden inneren, zweiten Lagerring 22 und auf Laufbahnen der Lagerringe 20, 22 geführte Wälzkörper (Kugeln) 21. Die Membranfeder 24 greift mit ihrem radial äußeren Bereich an einer Druckplatte 25 an und übt im eingerückten Zustand eine Kraft auf eine zeichnerisch nicht dargestellte Kupplungsscheibe und ein ebenfalls nicht dargestelltes Schwungrad aus. Die Membranfeder 24 ist in Umfangsrichtung an mehreren Positionen an einem Kupplungsgehäuse 27 befestigt, um welche sich die Federzungen 26 mit ihren freien Enden 28 innerhalb der Zeichenebene radial zu einer Achse A der Ausrückeinrichtung 10 beim Ausrücken im begrenzten Maße verschwenken können.

Das Koppelelement 30 stellt somit die Wirkverbindung zwischen dem umlaufenden Lagerring 22 und den Federzungen 26 her und hat die Aufgabe, in einem Fahrzeugantriebsstrang auftretende Taumelschwingen, welche von einem Verbrennungsmotor ausgehen und über die Reibungskupplung 12 und deren Betätigungsorgan 24 von der Ausrückeinrichtung 10, insbesondere dem Ausrücklager 18 und der axial geführten Schiebehülse 16 fernzuhalten. Das Koppelelement 30 bildet somit eine zwischen der Reibungskupplung 12 und deren Ausrückeinrichtung 10 angeordnete Taumelscheibe.

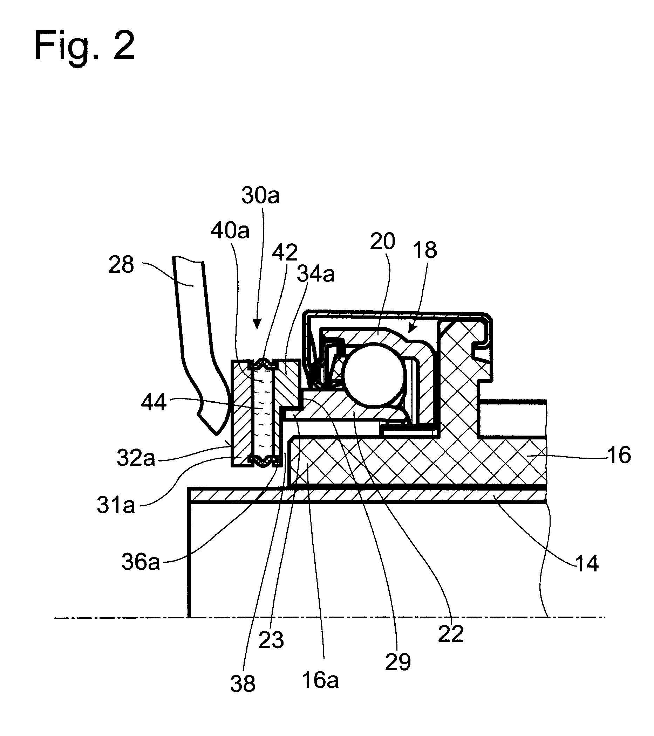

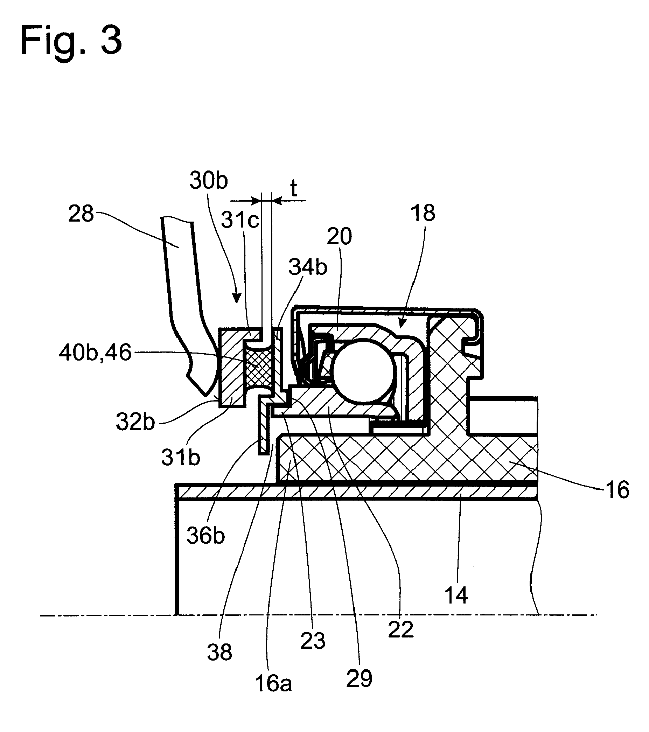

Das Koppelelement 30 wird nachfolgend anhand der in den Fig. 2 und 3 dargestellten Ausführungsbeispiele näher beschrieben, welche im grundsätzlichen Aufbau übereinstimmen und sich nur im Detail unterscheiden. Das Koppelelement 30a; 30b umfasst eine aus einem thermobeständigen Kunststoff oder einem metallischen Werkstoff gefertigte Anlaufscheibe 31 a; 31 b, die einen Anlagebereich 32a; 32b für die an dieser anliegenden Membranfederzungen 28 definiert. An einem Axialvorsprung 23 des umlaufenden Lagerrings 22 ist eine ebenfalls aus den vorgenannten Werkstoffen hergestellte und als Befestigungsbereich dienende Zentrierscheibe 34a; 34b drehfest angeordnet, die sich dort axial an einem Absatz 29 abstützen kann. Es ist in den Fig. 2 und 3 erkennbar, dass sich ein radial innerer Abschnitt 36a; 36b der Zentrierscheibe 34a; 34b mit einem Axialfortsatz 16a der Schiebehülse 16 unter Ausbildung eines Axialspaltes 38 radial überlappt, wodurch ein Zutrittsbereich des Wälzlagers 18 gegenüber dem Eintritt von Kupplungsabrieb und Schmutz geschützt wird.

Zwischen der Anlaufscheibe 31 a, 31 b und der Zentrierscheibe 34a; 34b ist ein Verformungsbereich 40a; 40b angeordnet, der unter dem Einfluss von Taumelschwingungen verformbar und gegenüber von periodischen Formveränderungen dauerhaft stabil ausgeführt ist. Im Vergleich dazu sind der Anlagebereich 32a; 32b und ebenfalls der Befestigungsbereich 34a; 34b, d.h. die Anlaufscheibe 31 a; 31 b und die Zentrierscheibe 34a; 34b gegenüber Taumelschwingungen im Wesentlichen steif und formbeständig ausgeführt. Durch diese Bauweise kann sich der Anlagebereich 32a; 32b bei Aufnahme einer Taumelbewegung um die zur Rotationsachse der Reibungskupplung 12 senkrechten Raumachsen verschwenken, wohingegen die Zentrierscheibe 34a; 34b und der umlaufende Lagerring 22 gegenüber der Taumelbewegung mechanisch entkoppelt sind. Die Anlaufscheibe 31 a; 31 b ist innerhalb eines vorgegebenen Bereiches zusätzlich zu deren Verschwenkbewegung in einer zur Rotationsachse der Reibungskupplung 12 senkrechten Ebene gegenüber dem umlaufenden Lagerring 22 frei verlagerbar.

In Fig. 2 umfasst der Verformungsbereich 40a einen elastischen ringhülsenförmigen, in der Art eines Metallfaltenbalges ausgebildeten, jedoch federweich gestalteten Membrankörper 42, dessen axiale Enden drehfest mit der Anlaufscheibe 31 a und der Zentrierscheibe 34a verbunden sind und dessen Innenraum 44 mit einem inkompressiblen Fluid mit nahezu keinen oder höchstens niedrigen Dämpfungseigenschaften befüllt ist.

Das Koppelelement 30b kann auch gemäß Fig. 3 in besonders einfacher Weise als ein Gummi-Metall-Element ausgebildet sein, wobei der Verformungsbereich 40b durch einen Gummikörper 46 gebildet wird, welcher axial mit der Anlaufscheibe 31b und mit der Zentrierscheibe 34b durch Vulkanisieren verbunden ist. Bei beiden Koppelelementen 30a; 30b kann bei entsprechender Formgebung des umlaufenden Lagerringes 22 auf die Zentrierscheibe 34a; 34b verzichtet und der Verformungsbereich 40a; 40b unmittelbar mit dem umlaufenden Lagerring 22 verbunden werden, so dass dadurch eine einzige Baueinheit gebildet wird.

Durch den beschriebenen Aufbau wird des Weiteren eine weitgehende thermische Isolation der Anlaufscheibe 31 a; 31 b zu dem umlaufenden Lagerring 22 und insbesondere gegenüber dem Lagerinnenraum geschaffen, so dass die bei einer Kupplungsbetätigung im Bereich der Anlaufscheibe 31 a; 31 b entstehende Reibungswärme vor dem Erreichen des Ausrücklagers 18 dissipieren kann.

Zur Begrenzung der Taumelbewegung der Anlaufscheibe 31 a; 31 b sind an den Koppelelementen 30a; 30b Bewegungsbegrenzungsmittel vorgesehen. Diese werden bei dem in Fig. 2 dargestellten Koppelement 30a durch den Metallfaltenbalg 42 selbst gebildet, der bei maximaler Kompression eine weitere Verschwenkbewegung der Anlaufscheibe 31 a blockiert. Bei dem in Fig. 3 gezeigten Koppelelement 30b ist am Außendurchmesser der Anlaufscheibe 31 b ein zu der Zentrierscheibe 34b gerichteter Ringkragen 31 c ausgeführt, der gemeinsam mit der Zentrierscheibe 34b einen die Bewegungsfreiheit der Anlaufscheibe 31 a einschränkenden Ringspalt t ausbildet. Die Bewegungsbegrenzungsmittel können anstatt am Koppelement 30a; 30b alternativ oder zusätzlich auch am Ausrücklager 18 , am Ausrückelement 16 oder am Trägerelement 16 vorgesehen sein.

### Bezugszeichenliste

- 10: Ausrückeinrichtung
- 12: Reibungskupplung
- 13: Getriebe
- 14: Tragelement, Führungsrohr
- 16: Ausrückelement, Schiebehülse
- 16a: Axialfortsatz
- 18: Ausrücklager
- 20: Lageraußenring
- 21: Wälzkörper
- 22: Lagerinnenring
- 23: Axialvorsprung
- 24: Betätigungsorgan, Membranfeder
- 25: Druckplatte
- 26: Federzunge
- 27: Kupplungsgehäuse
- 28: Federzungenende
- 29: Absatz
- 30, 30a, 30b: Koppelelement
- 31a, 31b: Anlaufscheibe
- 31c: Ringkragen
- 32a, 32b: Anlagebereich
- 34a, 34b: Befestigungsbereich, Zentrierscheibe
- 36a, 36b: radial innerer Abschnitt
- 38: Axialspalt
- 40a, 40b: Verformungsbereich
- 42: Membrankörper, Metallfaltenbalg
- 44: Innenraum
- 46: Gummikörper

## Patentansprüche

1. Ausrückeinrichtung (10) zur Betätigung einer Reibungskupplung (12) eines Kraftfahrzeuges, umfassend
- ein Tragelement (14), welches ortsfest zu der Reibungskupplung (12) und koaxial zu deren Rotationsachse angeordnet ist,
- ein an dem Tragelement (14) gelagertes axial verlagerbares Ausrückelement (16),
- ein an dem Ausrückelement (16) angeordnetes Ausrücklager (18) mit einem drehfest zu dem Ausrückelement (16) angeordneten ersten Lagerring (20), Wälzkörper (21) und mit einem umlaufenden zweiten Lagerring (22),
- ein Koppelelement (30), welches in Wirkverbindung zwischen dem umlaufenden Lagerring (22) und einem Betätigungsorgan (24) der Reibungskupplung (12) angeordnet ist,
**dadurch gekennzeichnet,**
**dass** das Koppelelement (30) einen zu dem umlaufenden Lagerring (22) verlagerbaren und gegenüber Taumelschwingungen im Wesentlichen formbeständigen Anlagebereich (32a; 32b) zur Anlage des Betätigungsorgans (24) und einen mit diesem und dem umlaufenden Lagerring (22) wirkverbundenen, unter dem Einfluss von Taumelschwingungen formveränderlichen Verformungsbereich aufweist, wodurch der Anlagebereich (32a; 32b) zur Aufnahme einer Taumelbewegung um die zur Rotationsachse der Reibungskupplung (12) senkrechten Raumachsen verschwenkbar gelagert ist.

2. Ausrückeinrichtung (10) nach Anspruch 1,
**dadurch gekennzeichnet,**
**dass** der Anlagebereich (32a; 32b) in einer zur Rotationsachse der Reibungskupplung (12) senkrechten Ebene gegenüber dem umlaufenden Lagerring (22) frei verlagerbar ist.

3. Ausrückeinrichtung (10) nach Anspruch 1 oder 2,
**dadurch gekennzeichnet,**
**dass** das Koppelelement (30) in Baueinheit mit dem umlaufenden Lagerring (22) ausgeführt ist.

4. Ausrückeinrichtung (10) nach einem der vorhergehenden Ansprüche,
**dadurch gekennzeichnet,**
**dass** das Koppelelement (30a; 30b) mit einem Befestigungsbereich (34a; 34b) drehfest an dem umlaufenden Lagerring (22) festgelegt ist.

5. Ausrückeinrichtung (10) nach einem der vorhergehenden Ansprüche,
**dadurch gekennzeichnet,**
**dass** zur Bewegungsbegrenzung des Anlagebereiches (32a; 32b) Bewegungsbegrenzungsmittel (31 c) vorgesehen sind.

6. Ausrückeinrichtung (10) nach einem der vorhergehenden Ansprüche,
**dadurch gekennzeichnet,**
**dass** der Verformungsbereich (40a; 40b) ein elastisches Element aufweist.

7. Ausrückeinrichtung (10) nach einem der vorhergehenden Ansprüche,
**dadurch gekennzeichnet,**
**dass** der Verformungsbereich (40a) ein inkompressibles Medium umfasst.

8. Ausrückeinrichtung (10) nach einem der vorhergehenden Ansprüche,
**dadurch gekennzeichnet,**
**dass** umlaufende Lagerring (22) gegenüber dem Anlagebereich (32a; 32b) thermisch isoliert angeordnet ist.

9. Ausrückeinrichtung (10) nach einem der vorhergehenden Ansprüche,
**dadurch gekennzeichnet,**
**dass** das Koppelelement (30) mit dem Betätigungsorgan (24) eine vormontierte Baueinheit bildet.
